# FASCICULE DE BREVET EUROPEEN

(11) **EP 0 855 721 B1**
(45) Date de publication et mention de la délivrance du brevet: **10.04.2002**
(21) Numéro de dépôt: 98400087.7
(22) Date de dépôt: 19.01.1998
(51) Int. Cl.: H01B 7/08, G02B 6/44

(54) **Cable a fibres optiques**
Faseroptisches Kabel
Fibre optical cable

(30) Priorité: 27.01.1997 FR 9700826
(43) Date de publication de la demande: 29.07.1998
(73) Titulaire: ALCATEL, 75008 Paris (FR)
(72) Inventeur: Bourghelle, Patrick, 93200 Saint Denis (FR); Gaillard, Pierre, 92800 Puteaux (FR)
(74) Mandataire: Lamoureux, Bernard

(56) Documents cités:
- EP-A- 0 642 138
- EP-A- 0 734 030
- DE-A- 2 427 150
- US-A- 3 609 216
- US-A- 4 866 842

## Description

La présente invention concerne un câble à fibres optiques. Elle trouve application notamment, mais pas exclusivement, dans le domaine des boîtiers de raccordement des câbles à fibres optiques, connus également sous le nom d'organiseurs d'épissures.

Les boîtiers de raccordement comportent généralement une pluralité de cassettes de forme sensiblement quadrangulaire, qui peuvent être rangées côte à côte en rateliers ou encore superposées sous forme de tiroirs. Ces cassettes servent de logement à des raccords de câbles à fibres optiques et à des longueurs de réserve de câbles à fibres optiques, ces longueurs de réserve étant prévues pour permettre des opérations ultérieures de réépissure.

Il est connu d'utiliser des câbles à fibres optiques de type câble plat ou ruban, dans lequel les fibres optiques sont disposées parallèlement les unes aux autres et sont noyées dans une gaine isolante extrudée formant un ruban. Il est avantageux d'utiliser un tel câble plat dans une cassette de raccordement car le raccordement en masse est plus simple qu'un raccordement de fibres indépendantes les unes des autres.

Les inventeurs ont constaté que le lovage d'un câble plat dans une cassette de raccordement induisait d'une part des problèmes de courbure, le rayon de courbure étant limité par la rigidité du câble plat, ceci ayant pour effet de créer des difficultés de passage du câble plat dans certaines parties de la cassette, et d'autre part un problème causé par un effet ressort du câble plat qui tend naturellement à s'ouvrir lorsqu'il est enroulé sur lui-même.

Les documents US-A-3 609 216 et EP-A-0 642 138 décrivent des câbles plats qui peuvent être enroulés sur eux-mêmes autour de leur axe longitudinal.

La présente invention a pour but de résoudre les inconvénients de l'état de la technique.

A cette fin, l'invention a pour objet un câble à fibres optiques comprenant une pluralité de fibres optiques et une gaine isolante, ledit câble comprenant un tronçon d'extrémité sous forme de ruban, et étant caractérisé en ce qu'il comprend un tronçon central où ladite gaine isolante présente, en coupe transversale, une forme sensiblement tubulaire définissant un volume dans lequel les fibres optiques sont mécaniquement relativement libres vis-à-vis de la gaine isolante.

Cette structure permet un raccordement aisé grâce au tronçon d'extrémité sous forme de ruban tout en évitant l'effet resort observés avec les rubans enroulés sur eux-mêmes.

Il convient de noter que l'avantage de la structure selon l'invention est d'autant plus remarquable, par rapport aux rubans de l'art antérieur, que le nombre de fibres optiques du ruban est grand. En effet, la largeur du ruban étant proportionnelle au nombre de fibres optiques, les rubans qui, selon l'art antérieur, sont utilisés peuvent assez rapidement dépasser de la caissette de lovage. Au contraire, le diamètre de la gaine tubulaire selon l'invention ne croît pas proportionnellement au nombre de fibres optiques. Par ailleurs, plus le nombre de fibres optiques constituant le ruban est important, plus l'inertie préférentielle du ruban est importante, c'est-à-dire que le ruban possède un seul axe de courbure; ceci peut constituer un obstacle à la mise en place du ruban dans les boîtiers d'épissures. C'est inconvénient disparaît avec la structure selon l'invention.

Selon un mode de réalisation particulier, chaque tronçon d'extrémité du câble est sous forme de ruban.

De préférence, le câble comporte au moins trois fibres optiques. Par ailleurs, chaque fibre optique comporte de préférence un revêtement de protection primaire et une couche anti-adhésive. Cette couche anti-adhésive facilite la déformation du câble pour l'obtention d'un tronçon tubulaire à partir d'un tronçon de ruban.

De manière avantageuse, les fibres optiques sont mécaniquement libres par rapport à la gaine dans la partie du câble où la gaine est sous forme tubulaire. Dans ce cas, la gaine a principalement pour rôle d'éviter la dispersion des fibres optiques ailleurs que dans leur chemin de lovage.

L'invention a également pour objet un procédé de fabrication d'un câble à fibres optiques selon l'invention, ce procédé consistant à choisir un ruban à fibres optiques comprenant une pluralité de fibres optiques, et à agir par une contrainte thermique et/ou mécanique sur un tronçon central pour conférer à la gaine isolante de ce tronçon central une forme, en coupe transversale, sensiblement tubulaire définissant un volume dans lequel les fibres optiques sont'mécaniquement relativement libres vis-à-vis de la gaine isolante.

En particulier, la contrainte peut comporter une étape de chauffage pour assouplir la gaine isolante et une étape de pression mécanique appliquée sur chaque bord du ruban pour donner à la gaine une forme sensiblement tubulaire.

Les caractéristiques et avantages de l'invention ressortiront mieux de la description qui va suivre de modes de réalisation de l'invention, donnée à titre illustratif, mais non limitatif, en référence au dessin annexé, sur lequel :
- la figure 1 est une vue de face d'un câble selon l'invention,
- les figures 2 et 3 sont des coupes transversales selon les lignes II-II et III-III du câble de la figure 1, et
- les figures 4 et 5 représentent en coupe transversale des modes de réalisation du ruban.

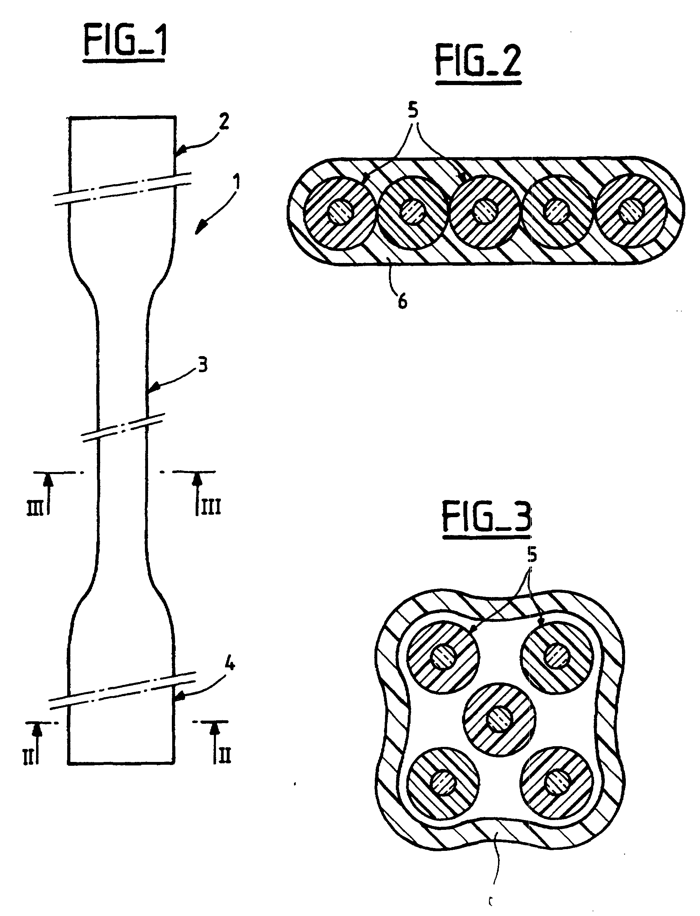

La figure 1 représente en vue de face un câble selon l'invention. Ce câble 1 comporte un premier tronçon d'extrémité 2, un tronçon central 3 et un second tronçon d'extrémité 4. Par tronçon central, on entend un tronçon qui n'est pas d'extrémité; un tronçon central n'est donc pas nécessairement situé au centre du câble, c'est-à-dire à égale distance des deux extrémités du câble.

Dans le mode de réalisation représenté, chaque tronçon d'extrémité a la forme d'un câble plat ou ruban. Comme on peut le voir sur la figure 2, les fibres optiques 5, qui dans l'exemple représenté sont au nombre de 4, sont disposées parallèlement les unes aux autres et sont mécaniquement maintenues dans une position relative déterminée par une gaine isolante 6, qui assure également une protection mécanique.

Le tronçon central du câble est de forme différente, la gaine isolante 6 y ayant une forme sensiblement tubulaire. Par forme sensiblement tubulaire, on entend que la gaine isolante définit un volume dans lequel les fibres optiques 5 sont mécaniquement relativement libres vis-à-vis de la gaine isolante. Le terme tubulaire ne doit pas ête pris dans le sens géométrique d'une forme annulaire à base circulaire, mais plus généralement dans le sens d'une forme annulaire quelconque, mais de préférence plus ou moins circulaire ou ovoïde.

Le câble selon l'invention présente l'avantage d'être facilement raccordable, les extrémités ayant la forme d'un ruban, tout en étant facilement logeable et lovable dans la cassette de raccordement grâce a sa partie centrale tubulaire souple qui impose moins de contraintes mécaniques aux fibres optiques et évite l'effet ressort rencontrés avec les rubans.

En outre, l'accès aux fibres optiques est rendu plus facile puisque, dans la partie tubulaire, on peut ouvrir la gaine isolante plus aisément que si le câble se présentait en totalité sous forme de ruban.

Dans le câble représenté sur la figure 1, les deux tronçons d'extrémité 2, 4 sont sous forme de ruban. L'invention englobe toutefois également un câble dont une seule extrémité se présente sous la forme d'un ruban, l'autre extrémité ayant une forme quelconque et pouvant, en particulier, avoir une forme tubulaire similaire à celle du tronçon central. Une telle structure offre un intérêt lorsque les fibres optiques du câble sont destinées, du côté de cette extrémité sous forme tubulaire, à être raccordées indépendamment les unes des autres.

L'invention s'applique à tous les câbles, quelle qu'en soit la longueur. Dans le cas d'un câble destiné à un boîtier de raccordement, la longueur du câble est généralement de l'ordre de 1 à 2 mètres. Les longueurs respectives des tronçons d'extrémité et du tronçon central dépendent évidemment de l'utilisation envisagée.

Le câble selon l'invention peut être obtenu facilement à partir d'un ruban de fibres optiques par déformation de la gaine à l'endroit où l'on souhaite que le câble adopte une forme sensiblement tubulaire. Cette déformation peut être produite par chauffage modéré de la gaine et/ou par déformation mécanique, notamment par pincement des bords du ruban, par ovalisation, par torsion, par roulage et plus généralement par toute manipulation du ruban engendrant le décollement des fibres optiques de la gaine sans détérioration des fibres optiques ou de la gaine.

Dans le cas d'une déformation par chauffage, la température et la durée du chauffage dépendent évidemment du matériau de la gaine, qui peut notamment être une résine époxy acrylate polymérisable aux UV, du nylon® ou du PVC.

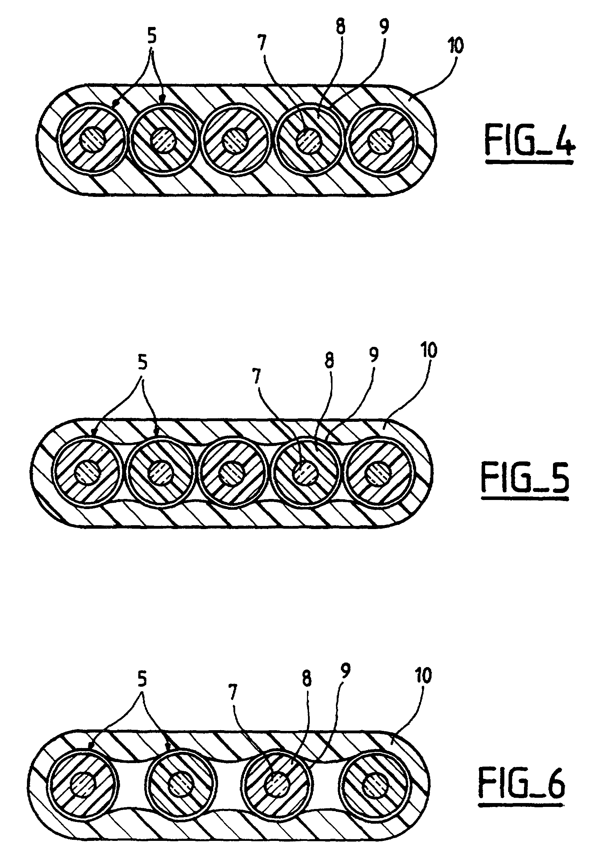

On a représenté en coupe transversale sur les figures 4 à 6 des rubans à fibres optiques pouvant facilement être déformé selon le procédé de l'invention.

Ces rubans comprennent une pluralité de fibres optiques 5 qui sont constituées chacune d'une fibre en verre 7 de diamètre 125 µm, d'une couche de protection 8 de 60 µm d'épaisseur et d'une couche anti-adhésive 9 de 10 µm d'épaisseur. Ces fibres optiques sont maintenues dans un même plan et à une distance déterminée les unes par rapport aux autres par une gaine isolante 10 ayant une épaisseur de l'ordre de 40 µm. Les matériaux utilisés pour former les rubans à fibres optiques représentés sont ceux classiquement utilisés par l'homme du métier.

Comme on peut le voir sur les figures, les fibres optiques peuvent être entièrement noyées dans la gaine isolante (cf. figure 4) ou seulement maintenues par une couche supérieure et une couche inférieure d'isolant (cf. figures 5 et 6), et les fibres optiques peuvent être en contact entre elles (cf. figures 4 et 5) ou disjointes (cf. figure 6).

La couche anti-adhésive 9 a pour fonction de faciliter le dénudage des fibres optiques. Il est bien entendu que cette couche anti-adhésive pourrait être omise si les matériaux utilisés pour la couche de protection 8 et la gaine isolante 10 sont peu adhérents l'un sur l'autre.

L'invention n'est pas limitée aux modes de réalisation représentés, mais englobe au contraire les moyens équivalents à ceux décrits et tous les modes de réalisation qui sont conformes aux revendications annexées.

## Revendications

1. Câble à fibres optiques comprenant une pluralité de fibres optiques (5) et une gaine isolante (6, 10), ledit câble comprenant un tronçon d'extrémité (2, 4) sous forme de ruban, **caractérisé en ce qu'**il comprend un tronçon central (3) où ladite gaine isolante présente, en coupe transversale, une forme sensiblement tubulaire définissant un volume dans lequel les fibres optiques (5) sont mécaniquement relativement libres vis-à-vis de la gaine isolante.

2. Câble à fibres optiques selon la revendication 1 **caractérisé en ce que** chaque tronçon d'extrémité (2, 4) est sous forme de ruban.

3. Câble à fibres optiques selon l'une des revendications 1 à 2 **caractérisé en ce qu'**il comporte au moins trois fibres optiques (5).

4. Câble à fibres optiques selon l'une des revendications 1 à 3 **caractérisé en ce que** chaque fibre optique (5) comporte une couche de protection (8) et une couche anti-adhésive (9).

5. Câble à fibres optiques selon l'une des revendications 1 à 4 **caractérisé en ce que** les fibres optiques (5) sont mécaniquement libres par rapport à la gaine isolante (6, 10) dans la partie du câble où ladite gaine est sous forme sensiblement tubulaire.

6. Procédé de fabrication d'un câble à fibres optiques selon l'une des revendications 1 à 5 **caractérisé en ce qu'**il consiste à choisir un ruban à fibres optiques comprenant une pluralité de fibres optiques (5) et à agir par une contrainte thermique et/ou mécanique sur un tronçon central pour conférer à la gaine isolante de ce tronçon central une forme, en coupe transversale, sensiblement tubulaire définissant un volume dans lequel les fibres optiques (5) sont mécaniquement relativement libres vis-à-vis de la gaine isolante.

7. Procédé selon la revendication 6 **caractérisé en ce que** ladite contrainte comporte une étape de chauffage pour assouplir ledit tronçon central de ladite gaine isolante et une étape de pression mécanique appliquée sur chaque côté du ruban plat pour donner audit tronçon central de ladite gaine isolante ladite forme sensiblement tubulaire.

## Claims

1. A fibre optic cable including a plurality of optical fibres (5) and an insulative sheath (6, 10), said cable having an end section (2, 4) in the form of a ribbon **characterized in that** it has a central section (3) where said insulative sheath is, in cross section, of substantially tubular form defining a volume in which the optical fibres (5) are mechanically relatively free with respect to the insulative sheath.

2. The fibre optic cable according to claim 1 **characterized in that** each end section (2, 4) is in the form of a ribbon.

3. The fibre optic cable according to either of claims 1 and 2 **characterized in that** it includes at least three optical fibres (5).

4. The fibre optic cable according to any of claims 1 to 3 **characterized in that** each optical fibre (5) has a protective cladding (8) and a non-stick layer (9).

5. The fibre optic cable according to any of claims 1 to 4 **characterized in that** the optical fibres (5) are mechanically free relative to the insulative sheath (6, 10) **in that** part of the cable where said sheath is of substantially tubular form.

6. A method of fabricating a fibre optic cable according to any of claims 1 through 5 **characterized in that** it consists in choosing a fibre optic ribbon having a plurality of optical fibres (5) and thermally and/or mechanically stressing a central section to give the insulative sheath of this central section a form which, in cross section, is substantially tubular defining a volume in which the optical fibres (5) are mechanically relatively free with respect to the insulative sheath.

7. The method according to claim 6 **characterized in that** said stressing includes a heating step to flexibilise said central section of said insulative sheath and a step in which mechanical pressure is applied to each edge of said flat ribbon to impart the substantially tubular form to said central section of said insulative sheath.

## Patentansprüche

1. Lichtwellenleiterkabel, das eine Vielzahl von Lichtwellenleitern (5) und eine Isolierhülle (6, 10) aufweist, wobei das Kabel einen Endabschnitt (2, 4) in Bandform aufweist, **dadurch gekennzeichnet, dass** es einen mittleren Abschnitt (3) aufweist, wo die Isolierhülle im Querschnitt eine im Wesentlichen rohrförmige Form aufweist, die ein Volumen definiert, in dem die Lichtwellenleiter (5) gegenüber der Isolierhülle mechanisch relativ ungehindert sind.

2. Lichtwellenleiterkabel nach Anspruch 1, **dadurch gekennzeichnet, dass** jeder Endabschnitt (2, 4) in Bandform vorliegt.

3. Lichtwellenleiterkabel nach einem der Ansprüche 1 bis 2, **dadurch gekennzeichnet, dass** es mindestens drei Lichtwellenleiter (5) aufweist.

4. Lichtwellenleiterkabel nach einem der Ansprüche 1 bis 3, **dadurch gekennzeichnet, dass** jeder Lichtwellenleiter (5) eine Schutzschicht (8) und eine Antihaftschicht (9) aufweist.

5. Lichtwellenleiterkabel nach einem der Ansprüche 1 bis 4, **dadurch gekennzeichnet, dass** die Lichtwellenleiter (5) in dem Teil des Kabels, in den die Hülle im Wesentlichen in rohrförmiger Form vorliegt, bezüglich der Isolierhülle (6, 10) mechanisch ungehindert sind.

6. Verfahren zur Herstellung eines Lichtwellenleiterkabels nach einem der Ansprüche 1 bis 5, **dadurch gekennzeichnet, dass** es die Auswahl eines Lichtwellenleiterbandes, das eine Vielzahl von Lichtwellenleitern (5) aufweist, und die Ausübung einer thermischen und/oder mechanischen Belastung auf einen mittleren Abschnitt, um der Isolierhülle dieses mittleren Abschnitts eine im Querschnitt im Wesentlichen rohrförmige Form zu verleihen, die ein Volumen definiert, in dem die Lichtwellenleiter gegenüber der Isolierhülle mechanisch relativ ungehindert sind, umfasst.

7. Verfahren nach Anspruch 6, **dadurch gekennzeichnet, dass** die Belastung einen Aufheizschritt zum Erweichen des mittleren Abschnitts der Isolierhülle und einen mechanischen Druckschritt, der auf jede Seite des flachen Bandes ausgeübt wird, um diesem mittleren Abschnitt der Isolierhülle die im Wesentlichen rohrförmige Form zu verleihen, umfasst.
